# EUROPEAN PATENT SPECIFICATION

(11) **EP 2 046 139 B1**
(45) Date of publication and mention of the grant of the patent: **19.02.2020**
(21) Application number: 07825863.9
(22) Date of filing: 29.06.2007
(51) Int. Cl.: A23G 9/34, A23G 9/42, A23G 9/44, A23G 9/52, A23G 9/32

(54) **ICE CREAM TYPE CONFECTIONERY PRODUCT AND PREPARATION PROCESS THEREFOR**
EISCREMEPRODUKT UND HERSTELLUNGSVERFAHREN DAFÜR
PRODUIT DE CONFISERIE DE TYPE CRÈME GLACÉE ET PROCÉDÉ DE PRÉPARATION POUR CELUI-CI

(30) Priority: 03.07.2006 IT TO20060488
(43) Date of publication of application: 15.04.2009
(73) Proprietor: SOREMARTEC S.A., 2632 Findel (LU); Ferrero S.p.A., 12051 Alba (Cuneo) (IT)
(72) Inventor: MARASSO, Teresio, 12057 Neive (Cuneo) (IT)
(74) Representative: Rambelli, Paolo
(86) International application number: PCT/IB2007/052523
(87) International publication number: WO 2008/004162

(56) References cited:
- EP-A- 0 177 077
- EP-A- 0 463 696
- EP-A- 0 480 665
- EP-A- 1 072 196
- EP-A- 1 106 075
- WO-A-86/01688
- WO-A-96/11578

## Description

The present invention relates to a fluid food product which can be kept for a prolonged period in the liquid state and which is intended to be frozen in a freezer before its consumption, in order to create an ice-cream product which is ready for consumption.

In particular, the invention relates to a product of the type described in EP-A-0 192 753 and EP-A-1 072 196. Both of the cited patent documents describe a food product which has nutritional and organoleptic characteristics typical of conventional ice cream, but which can be marketed normally in the liquid state and then frozen in an ordinary domestic freezer in static cooling and freezing conditions.

When frozen, even without mechanical beating to incorporate air and make the product rise, the products described have a non-aerated microcrystalline structure which is substantially uniform and free of ice crystals perceptible to the consumer.

Another distinctive feature of these products is that they can be subjected to repeated cycles of freezing and liquefaction, without degrading the capacity for producing a microcrystalline structure after the final freezing.

EP-A-0 192 753 describes a product having a food fat content of 10% to 18% by weight, containing a thickening and stabilizing compound which comprises a stabilizing protein salt, an alkaline metal alginate and a chemically modified starch.

EP-A-1 072 196 describes a product which has, in general, a fat content of 5% to 25% by weight, preferably 10% to 18% by weight, and includes a thickening compound comprising a stabilizing protein salt, a chemically modified starch and a hydrocolloid chosen from water soluble hemicellulose and pectin having a high degree of esterification.

In both of the cited patent documents, the examples relate to products having fat contents of about 14 - 15.5% by weight.

Products of the aforesaid type are normally subjected to freezing at temperatures from -8°C to -24°C; in order to achieve the best organoleptic and palatability characteristics for consumption, the product must be kept at ambient temperature for a period varying with the refrigeration temperature, but generally in the range from 5 to 10 minutes, after its removal from the refrigerator.

The need for this waiting time may be a disadvantage, since, if this condition is not complied with, the consumer may perceive characteristics of creaminess of the product on the palate which do not match the palatability characteristics of a conventional industrially produced ice cream.

The primary object of the present invention is therefore to provide a new ice-cream confectionery product of the aforesaid type, which has the desired organoleptic palatability characteristics immediately after its removal from the refrigerator or after a very short waiting time.

A specific object of the invention is to provide a product which achieves the aforesaid object in the presence of a food fat content from 3% to 6% by weight in the product, in other words a product having the typical food characteristics of products known as "sorbets". This is because the problem of the waiting time becomes more serious as the content of food fats in the product decreases.

Another specific object of the invention is to provide a product which achieves the aforesaid primary object and which contains a fruit component chosen from juice, concentrate, puree and freeze-dried fruit and milk protein containing yoghurt in other words substances which impart an acid pH to the product.

In view of these objects, the invention proposes an ice-cream confectionery product and a method for preparing it which have the characteristics specified in the attached claims.

In particular, products according to the invention are characterized by an ethyl alcohol content in the range from 0.5% to 3% (volume to weight ratio), preferably from 1 to 2.5%, relative to the total weight of the emulsion forming the product.

The product according to the invention generally has a food fat content of 3% to 6% by weight, relative to the weight of the emulsion; however, in a preferred embodiment, the product has a fat content from 3% to 5% by weight.

The fatty phase of the emulsion preferably consists of vegetable fats, preferably chosen from oils having a melting point in the range from 30°C to 36°C, such as coconut oil, palm oil and palm kernel oil. Of these, it is preferable to use fractionated coconut oil, in other words the high-melting fraction of coconut oil, primarily because of its organoleptic characteristics.

It is possible to add more fats by the optional use of whole milk or milk cream or by using milk fermentation products, particularly yogurt.

Typically, yogurt is used in a proportion of 5% to 25% by weight in the product.

The product contains a fruit component chosen from concentrates, juices, purees, freeze-dried products and, in particular, concentrated juices.

The proportion of the fruit component is in the range from 0.1% to 5% by weight, expressed as solid dry weight relative to the weight of the emulsion. The fruit component can comprise insoluble solids, generally up to 50% of its total solid dry weight. For example, fruit concentrates are used with a concentration of 40 Brix in a proportion of 1% to 4% by weight, relative to the weight of the emulsion.

The fruits are preferably chosen from lemons, mandarins, mango and passion fruit; it is preferable to use fruits with a high content of pectin and polysaccharides which reduce the emulsion setting time.

The product according to the invention has an acid pH in the range from 2.5 to 5.5 and preferably in the range from 2.5 to 4.5.

The product according to the invention comprises yoghurt containing milk proteins providing a protein content of 0.1% to 1.5% by weight. The total milk protein content, inclusive of the proteins obtained from yoghurt and added proteins, when used, is generally in the range from 0.1% to 5% by weight, or preferably 0.5% to 3% by weight.

The product can contain soluble and/or partially soluble fibres, particularly fruit oligosaccharides and/or inulin and mixtures of these, in total or partial replacement of the added milk proteins. The content of soluble and/or partially soluble fibres is generally in the range from 0.5% to 5% by weight.

It is preferable to use sucrose and/or fructose as a sweetener, optionally in combination with glucose syrup, maltodextrin and sorbitol syrup. The use of fructose is advantageous, because it reduces the freezing point of the emulsion owing to its low molecular weight. The use of sucrose is also preferable, since, in acid pH conditions, the phenomenon of inversion occurs, producing glucose and fructose with a corresponding reduction of the freezing point of the emulsion.

The emulsion according to the invention also comprises additives for thickening and stabilizing the emulsion, including one or more hydrocolloids and preferably a stabilizing protein salt.

Stabilizing protein salt is typically a disodium or dipotassium phosphate, used in proportions of 0.005% to 0.3%, or preferably 0.1% to 0.02% by weight relative to the weight of the emulsion.

Hydrocolloids include one or more substances chosen from chemically modified starch (for example starch no. 14 with adipic crosslinking, starch acetate and distarch phosphate), physically modified starch with a high amylopectin content, such as "waxy" starch, water soluble hemicellulose, microcrystalline cellulose, pectin with a degree of esterification exceeding 50% by weight, propylene glycol alginate and mixtures thereof.

The starch is typically used in proportions of 0.1% to 1.5% by weight relative to the total weight of the emulsion.

The additional hydrocolloids can be chosen from the following:
- water soluble hemicellulose with a mean molecular weight in the range from 100000 to 400000, produced by degradation of water insoluble protein-containing vegetable fibres in acid conditions;
- microcrystalline cellulose;
- pectin with a high degree of esterification, preferably above 50% and more preferably not below 70%;
- propylene glycol alginate and mixtures of the aforesaid hydrocolloids.

Typically, the aforesaid hydrocolloids are used, individually or in combination with each other, in proportions of 0.05% to 3% by weight relative to the weight of the emulsion, and preferably from 0.1% to 0.5% by weight.

In the preferred embodiment, the additives for thickening and stabilizing the emulsion comprise the aforesaid stabilizing protein salt, combined with chemically or physically modified starch as defined above and a further hydrocolloid chosen from pectin with a high degree of esterification (as defined above) and/or polypropylene glycol alginate. The emulsion can also comprise emulsifiers chosen from monoglycerides and sucrose esters in a proportion of 0.1% to 0.5% of the weight of the emulsion.

The product according to the invention can be made by a method comprising the following stages:
- preparation of an emulsion, at a temperature preferably in the range from 50°C to 65°C, by mixing milk protein containing yoghurt sugars, stabilizers and/or thickeners, food fats, any necessary emulsifiers and water;
- de-aeration treatment of the resulting mixture;
- addition of a flavouring mixture, ethyl alcohol and fruit components chosen from juice, concentrate, puree and freeze-dried fruit to the de-aerated mixture;
- heat treatment, preferably at a temperature of not more than 105°C, for a sufficient time to produce a sterile mixture;
- homogenization of the emulsion, for example at a temperature of 60°C to 80°C, and at a pressure of 70 to 200 bars; and
- cooling of the product thus produced for subsequent packaging in sterile conditions.

The preferred method for preparing the product proposed by the invention comprises the following steps:
- preparation of a base (yogurt base) comprising yogurt, sugars and stabilizers;
- preparation of an aqueous base comprising water, sugar, starches, any necessary milk proteins and other water-soluble components;
- preparation of an oil-in-water emulsion by melting the food fats at a temperature preferably not exceeding 50°C and subsequently adding the melted fats to the water base;
- preparation of the finished base by assembling the previously prepared bases, de-aeration treatment to reduce the dissolved oxygen content to a level preferably below 0.5 ppm at 50°C, and completion by addition of the flavouring and fruit base (comprising alcohol, flavourings and fruit components as defined above).

The product made in this way is then subjected to heat treatment using tube bundle heat exchangers or scraped surface and plate heat exchangers, and is subsequently homogenized under a pressure of 70-200 bars. The heat treatment is preferably an ultrapasteurization treatment at a maximum process temperature of 105°C, preferably for 15 seconds. The product treated in this way is stored in aseptic reservoirs and is subsequently packed into sterile containers in aseptic conditions. The containers are preferably tubs with capacities in the range from 40 to 400 ml, with their mouths sealed with aluminium strips.

### Example 1

The product according to the invention was made by the following method.

### Yogurt base:

- preparation of the water-stabilizer mixture at a temperature in the range from 50°C to 65°C and cooling of the mixture to a temperature in the range from 10°C to 35°C;
- heating of the yogurt to a temperature not exceeding 35°C;
- combination and mixing of the water-stabilizer mixture with the yogurt;
- storage of the mixture at about 20°C.

### Water base:

- heating of the water and addition of the dry components, suitably premixed with each other;
- mixing at a temperature not exceeding 65°C, maintained for the time required for the complete dissolution of the added components;
- the resulting base is preferably cooled to about 55°C.

### Emulsion base:

- melting of the fat and heating to temperatures not exceeding 50°C;
- addition of emulsifiers (monoglycerides and/or sucrose esters) to the melted fat;
- addition of the melted fat to the water base;
- formation of the emulsion in water and cooling of the resulting emulsion to about 20°C.

### Finished base:

- The yogurt base is added to the emulsion base, with stirring to avoid breaking the emulsion which has been formed;
- the resulting mixture is subjected to a de-aeration process to reduce the dissolved oxygen content to a level below 0.5 ppm at 50°C;
- the de-aerated mixture is finally completed by the addition of the fruit component, the alcohol and the flavourings;
- the finished intermediate product is placed in a store while awaiting the heat treatment process to which it is subjected.

### Finished product:

- the heat treatment process, which suppresses the microbial load in the product, is carried out by means of scraped surface or plate equipment, at a maximum effective temperature of 105°C for a period of 15 seconds;
- after this treatment the product is homogenized in aseptic conditions at 150 bars;
- the product is then cooled and stored in an aseptic reservoir before the final packaging in sterile tubs.

A product having the following composition was prepared by the above method:

| EXAMPLE 1 | |
|---|---|
| Ingredients | **% w** |
| Water | 37.158 |
| Sucrose | 28.000 |
| Yogurt | 16.000 |
| Fruit juice* | 8.000 |
| Vegetable fat | 5.000 |
| Alcohol | 1.580 |
| Modified starch no. 14 | 1.500 |
| Sorbitol syrup | 1.000 |
| Milk proteins | 1.000 |
| HM pectin | 0.350 |
| Sucrose ester | 0.300 |
| Flavourings | 0.100 |
| Acidic sodium phosphate | 0.012 |
| Total | 100.000 |

| | |
|---|---|
| * fruit juice, 5° Brix Total fat content: 6% by weight Total proteins: 1.5% by weight Sugars: 30% by weight pH: 3.5 | |

### Example 2

A product having the following composition was prepared according to the procedure outlined above:

| EXAMPLE 2 | |
|---|---|
| Ingredients | **% w** |
| Water | 28.600 |
| Sucrose | 23.000 |
| Fruit juice* | 23.000 |
| Yogurt | 16.000 |
| Vegetable fat | 5.000 |
| Alcohol | 1.580 |
| Sorbitol syrup | 1.000 |
| Starch | 0.600 |
| Milk proteins | 0.500 |
| HM pectin | 0.250 |
| Hemicellulose | 0.150 |
| Monoglyceride | 0.150 |
| Acidic sodium phosphate | 0.120 |
| Flavourings | 0.050 |
| Total | 100.000 |

| | |
|---|---|
| * fruit juice, 10° Brix Total fat content: 5% by weight Total proteins: 0.8% by weight Sugars: 30% by weight pH: 3.2 | |

The products according to the invention have a freezing point typically in the range from - 5°C to -14°C, preferably about -9°C/-12°C.

These products generally have a dry solid content of about 30-35% by weight.

The packaged product is a sterile product which can be kept in the liquid state and at ambient temperature for a period of at least three months after packaging, without degradation of its organoleptic properties.

Freezing is carried out in a domestic refrigerator at temperatures of about -15°C to -24°C. Freezing thus takes place in static conditions without the incorporation of air and without overrun. Before freezing it is preferable to shake the closed container, in order to homogenize the emulsion of the product contained in it. Since the emulsion substantially occupies the whole internal volume of the package, the shaking does not generally cause significant incorporation of air.

After freezing, the mean numerical dimension of the crystals is in the range from 5 to 35 µm, while the maximum dimension does not exceed 150 µm, thus ensuring that the crystals are not perceptible in a disagreeable way to the consumer.

Immediately after removal from the freezer, the product has a soft scoop consistency, such that the product can be scooped out with a spoon.

If the product is not consumed after freezing but is subjected to liquefaction, the product in the closed container can be refrozen one or more times without adversely affecting the stability of the emulsion and/or the microcrystalline quality of the frozen product ready for consumption.

The product according to the invention was frozen in static conditions and subjected to tests to determine the time taken for the formation of the first drop.

The products were also subjected to tests for determination of the consistency, as a function of the temperature of the product.

### Determination of the first drop time

These tests were conducted on products packaged in plastic tubs of truncated pyramidal shape, containing 66 ± 1 g of product. The tubs had a major base dimension of about 82 x 38 mm and a minor base dimension of about 70 x 24 mm, with a height of about 35 mm, and were sealed by an aluminium sealing strip welded to the mouth flange of the major base.

The products contained in the aforesaid tubs were shaken and then placed in a freezer at a temperature of -25°C ± 1°C (four stars, horizontal chest type). Freezing was carried out by placing the tubs in the freezer, resting on the sealing strips.

The products were kept in the freezer for 15 hours, in order to reproduce the typical conditions of freezing in the domestic environment. After 15 hours, the products removed from the freezer had a temperature of about -21°C ± 2°C (determined in the core of the product, using a digital probe); the sealing strip was removed and the opened tub was immediately placed on a support with the base surfaces on a vertical plane, in a temperature-controlled environment at 21.8°C, without humidity control.

The measured drop time is the time elapsing from removal from the freezer to the formation of the first drop. The product was then kept in the same conditions for at least 9 minutes after the first drop, and the total (cumulative) quantity of melted product was measured at intervals of 2-4 minutes.

In the attached drawings, relating to tests conducted on products made according to Example 1,

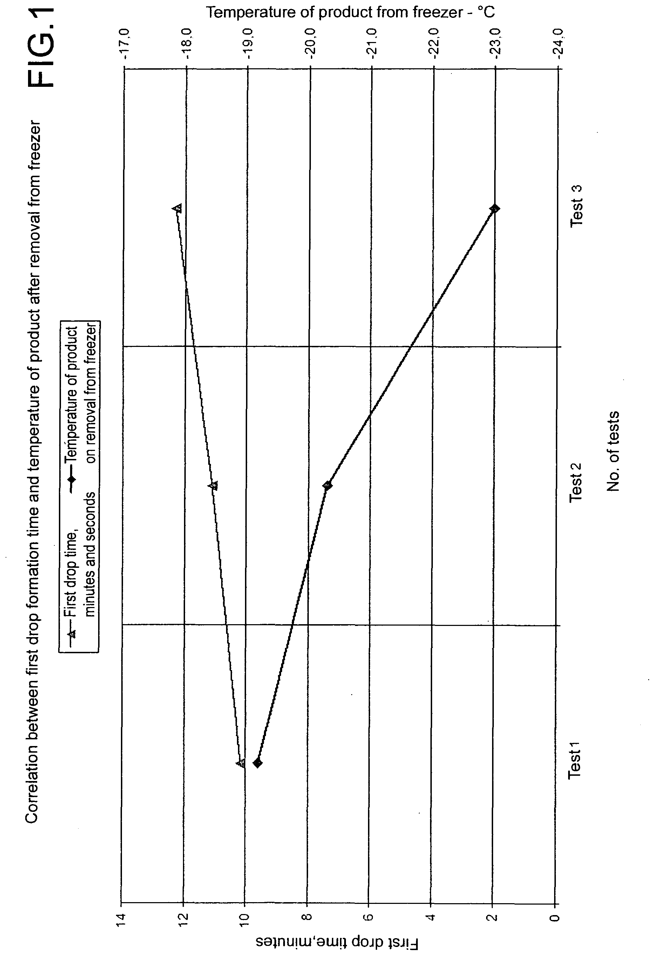

- Figure 1 is a diagram of the time taken for the formation of the first drop, in three tests differing in respect of the temperature of the product removed from the freezer; and

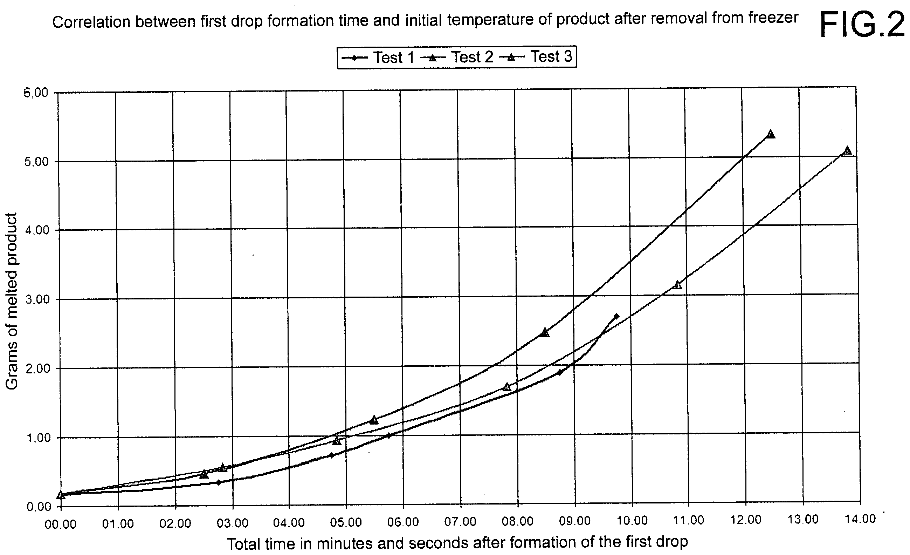

- Figure 2 is a diagram showing the quantity of melted product as a function of time, starting from the zero time corresponding to the time of formation of the first drop.

As a general rule, the products according to the invention have a first drop formation time (in an environment at 22°C) in the range from 8 to 12 minutes, preferably 9-11 minutes, measured in the test conditions described above after the packaged product had been kept in a freezer at -24°C until equilibrium had been reached.

### Consistency tests

The consistency tests were conducted using a TAX T2i texture analyser. A compression test was conducted with vertical shearing of the product, using a probe consisting of a trapezoidal blade with a speed of advance of 1 mm/second, over a distance of 20 mm, corresponding to the depth of the frozen product in the tub.

The tests were conducted on products packaged as described above, after a period of storage for 17 hours in a domestic freezer at a temperature of -25°C ± 1°C. After freezing, the product was removed from the corresponding tub, placed on the measurement plate and left at ambient temperature (22°C) for a sufficient time to reach a temperature of -20°C, - 15°C and -10°C in the core of the product. These temperatures were reached after about 3, 12 and 18 minutes respectively.

In the attached drawings, relating to tests conducted on products made according to Example 1,

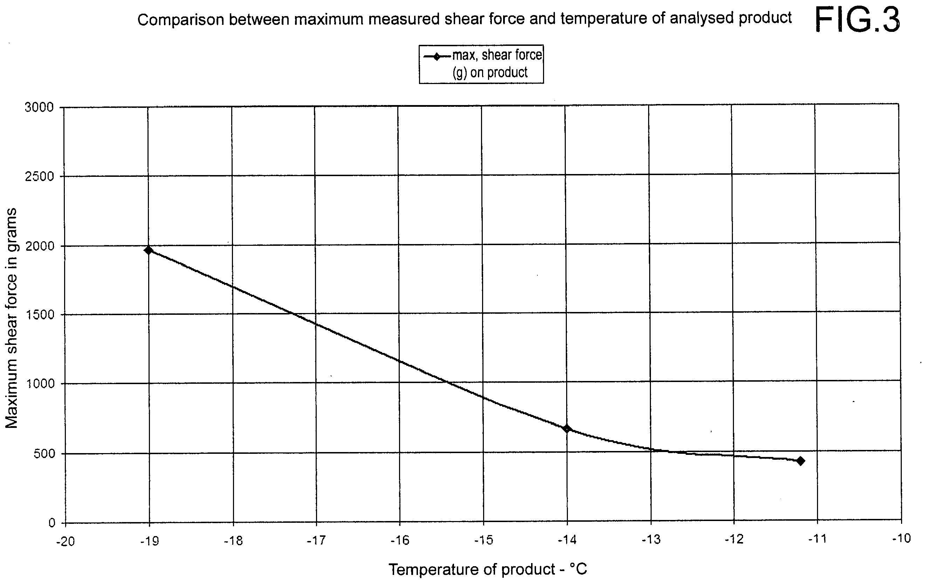

- Figure 3 is a diagram showing the maximum shear force (in grams) as a function of the temperature measured in the core of the product with a digital probe;

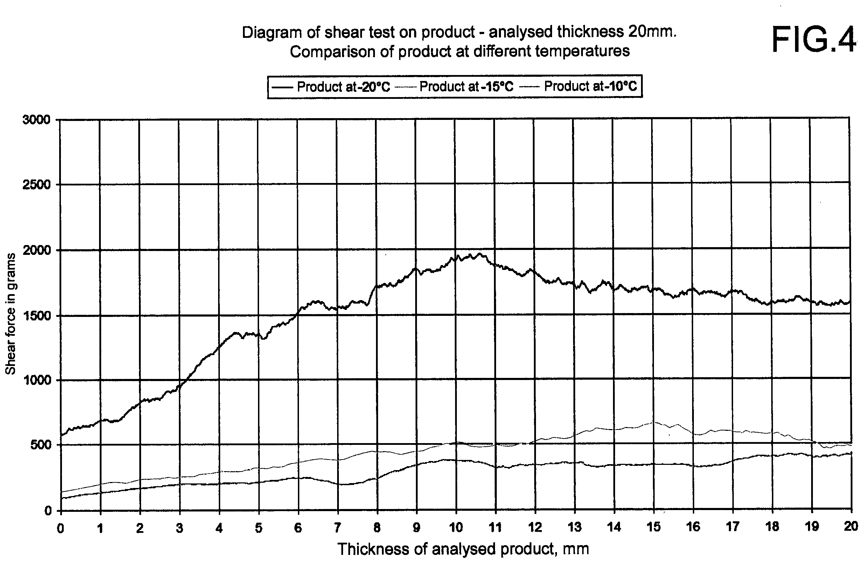

- Figure 4 is a diagram showing the variation of the shear force as a function of the thickness of the product analysed in three tests corresponding to different temperatures measured in the core of the product (-20°C; -15°C and -10°C), these temperatures being reached about 3, 12 and 18 minutes after removal from the freezer.

As a general rule, the products according to the invention have a consistency, determined using the texture analyser by the method described above, in the range from 1500 to 2500 grams in weight, preferably 1800-2200 g for a temperature of -20°C in the core of the product, corresponding to a period of about 3 minutes after removal from the freezer.

The tests which were conducted show that, while the product according to the invention has a relatively long drop time, comparable to the drop times of the products according to EP-A-1 072 196, it also has a substantially lighter consistency than these products, making the product suitable for consumption immediately after its removal from the freezer. The achievement of this result without a substantial reduction in the drop time is clearly advantageous for the purposes of consumption.

## Claims

1. An ice-cream confectionery product, in the form of an emulsion which is liquid at ambient temperature and can be stored at ambient temperature in the liquid state when packaged in sterile packages, having a microcrystalline structure after being frozen in static conditions without the incorporation of gas, comprising food fats, milk derivatives, sweeteners, emulsion stabilizing additives, flavourings, water and any necessary emulsifiers, **characterized in that**:
- it comprises milk fermentation products, containing milk proteins, wherein the milk fermentation product, is yogurt in sufficient quantity to provide a protein content of 0.1% to 1.5% by weight;
- it comprises a fruit component chosen from juice, concentrate, puree and freeze-dried fruit, wherein the fruit component is in a proportion in the range from 0.1% to 5% by weight expressed as dry solid weight relative to the weight of the emulsion;
- it has a food fat content in the range from 3% to 6% by weight;
- it comprises an ethyl alcohol content of 0.5% to 3% volume/weight;
- it has an acid pH in the range from 2.5 to 5.5; and
- it comprises one or more hydrocolloids chosen from chemically modified starch, physically modified starch, water soluble hemicellulose, microcrystalline cellulose, pectin with a degree of esterification exceeding 50% by weight, propylene glycol alginate and mixtures of these.

2. A confectionery product according to claim 1, **characterized in that** it comprises soluble and/or partially soluble fibres chosen from fruit oligosaccharides and inulin, preferably in a proportion in the range from 0.5% to 5% by weight.

3. A confectionery product according to Claim 1 or 2, comprising waxy starch (amylopectin content in excess of 85%).

4. A confectionery product according to anyone of Claims 1 to 3, containing physically or chemically modified starch in a proportion from 0.1% to 1.5% by weight relative to the total weight of the emulsion.

5. A confectionery product according to Claim 1 or 2, **characterized in that** it comprises a hydrocolloid chosen from water soluble hemicellulose, microcrystalline cellulose, pectin with a degree of esterification exceeding 50%, propylene glycol alginate and mixtures of these, in a proportion from 0.05% to 3% by weight relative to the weight of the emulsion.

6. A confectionery product according to any one of the preceding claims, **characterized in that**, after freezing in static conditions, it has a microcrystalline structure with microcrystals having dimensions not exceeding 150 µm.

7. A confectionery product according to any one of the preceding claims, **characterized in that** it has a freezing point in the range from -9°C to -14°C.

8. A confectionery product according to any one of the preceding claims, **characterized in that** it has an ethyl alcohol content in the range from 1% to 2.5% volume/weight.

9. A confectionery product according to any one of the preceding claims, **characterized in that**, after freezing in static conditions, in a closed container, at a temperature of -25°C ± 1°C until equilibrium is reached, it has a first drop formation time in the range from 9 to 11 minutes in an environment at 22°C.

10. A confectionery product according to any one of the preceding claims, **characterized in that**, after freezing in static conditions, in a closed container, at a temperature of -25°C ± 1°C until equilibrium is reached, it has a consistency of 1500 to 2500 g, determined by means of a texture analyser, after being kept at a temperature of 22°C for about three minutes.

11. A confectionery product according to any one of Claims 1 to 10, in frozen form, without overrun.

12. A method for preparing a confectionery product according to any one of the preceding claims, **characterized in that** it comprises the stages of:
- preparation of an emulsion, by mixing milk fermentation products, sugars, stabilizers and/or thickeners, food fats, any necessary emulsifiers and water;
- de-aeration treatment of the mixture produced in this way;
- addition of a flavouring mixture, ethyl alcohol and fruit component;
- heat treatment, preferably at a temperature of not more than 105°C, for a sufficient time to produce a sterile mixture;
- homogenization; and
- cooling of the resulting product for packaging in sterile conditions.

## Patentansprüche

1. Eiscreme-Süßwarenprodukt in Form einer Emulsion, das bei Umgebungstemperatur flüssig ist und in steriler Verpackung im flüssigen Zustand bei Umgebungstemperatur gelagert werden kann und nach dem Gefrieren unter statischen Bedingungen ohne Einarbeitung von Gas eine mikrokristalline Struktur aufweist, das Nahrungsmittelfette, Milchderivate, Süßungsmittel, emulsionsstabilisierende Additive, Geschmackstoffe, Wasser und erforderliche Emulgatoren umfasst, **dadurch gekennzeichnet, dass**:
- es Milchfermentationsprodukte, enthaltend Milchproteine, umfasst, wobei das Milchfermentationsprodukt Joghurt in ausreichender Menge ist, um einen Proteingehalt von 0,1 bis 1,5 Gew.-% bereitzustellen;
- es eine Fruchtkomponente, ausgewählt aus Saft, Konzentrat, Püree und gefriergetrockneten Früchten, umfasst, wobei die Fruchtkomponente zu einem Anteil im Bereich von 0,1 bis 5 Gew.-%, ausgedrückt als Trockengewicht, bezogen auf das Gewicht der Emulsion, vorliegt;
- es einen Nahrungsmittelfettgehalt im Bereich von 3 bis 6 Gew.-% aufweist;
- es einen Ethylalkoholgehalt von 0,5% bis 3% Volumen/Gewicht aufweist;
- es einen sauren pH-Wert im Bereich von 2,5 bis 5,5 aufweist; und
- es ein oder mehrere Hydrokolloide umfasst, die aus chemisch modifizierter Stärke, physikalisch modifizierter Stärke, wasserlöslicher Hemicellulose, mikrokristalliner Cellulose, Pektin mit einem Veresterungsgrad von mehr als 50 Gew.-%, Propylenglycolalginat und Mischungen davon ausgewählt sind.

2. Süßwarenprodukt gemäß Anspruch 1, **dadurch gekennzeichnet, dass** es lösliche und/oder teilweise lösliche Fasern, ausgewählt aus Fruchtoligosacchariden und Inulin, bevorzugt zu einem Anteil im Bereich von 0,5 bis 5 Gew.-%, umfasst.

3. Süßwarenprodukt gemäß Anspruch 1 oder 2, umfassend Wachsstärke (Amylopektingehalt von mehr als 85%).

4. Süßwarenprodukt gemäß einem der Ansprüche 1 bis 3, enthaltend physikalisch oder chemisch modifizierte Stärke zu einem Anteil von 0,1 bis 1,5 Gew.-%, bezogen auf das Gesamtgewicht der Emulsion.

5. Süßwarenprodukt gemäß Anspruch 1 oder 2, **dadurch gekennzeichnet, dass** es ein oder mehrere Hydrokolloide, ausgewählt aus wasserlöslicher Hemicellulose, mikrokristalliner Cellulose, Pektin mit einem Veresterungsgrad von mehr als 50 Gew.-%, Propylenglycolalginat und Mischungen davon, zu einem Anteil von 0,05 bis 3 Gew.-%, bezogen auf das Gewicht der Emulsion, umfasst.

6. Süßwarenprodukt gemäß einem der vorhergehenden Ansprüche, **dadurch gekennzeichnet, dass** es nach dem Gefrieren unter statischen Bedingungen eine mikrokristalline Struktur mit Mikrokristallen mit Abmessungen von nicht mehr als 150 µm aufweist.

7. Süßwarenprodukt gemäß einem der vorhergehenden Ansprüche, **dadurch gekennzeichnet, dass** es einen Gefrierpunkt im Bereich von -9°C bis -14°C aufweist.

8. Süßwarenprodukt gemäß einem der vorhergehenden Ansprüche, **dadurch gekennzeichnet, dass** es einen Ethylalkoholgehalt im Bereich von 1% bis 2,5% Volumen/Gewicht aufweist.

9. Süßwarenprodukt gemäß einem der vorhergehenden Ansprüche, **dadurch gekennzeichnet, dass** es nach dem Gefrieren unter statischen Bedingungen in einem geschlossenen Behälter bei einer Temperatur von -25°C ± 1°C bis zum Erreichen des Gleichgewichts eine Bildungszeit von ersten Tropfen im Bereich von 9 bis 11 Minuten in einer Umgebung bei 22°C aufweist.

10. Süßwarenprodukt gemäß einem der vorhergehenden Ansprüche, **dadurch gekennzeichnet, dass** es nach dem Gefrieren unter statischen Bedingungen in einem geschlossenen Behälter bei einer Temperatur von -25°C ± 1°C bis zum Erreichen des Gleichgewichts eine Konsistenz von 1500 bis 2500 g, bestimmt mittels eines Texturanalysators, aufweist, nachdem es etwa drei Minuten bei einer Temperatur von 22°C gehalten worden ist.

11. Süßwarenprodukt gemäß einem der Ansprüche 1 bis 10 in gefrorener Form ohne Überlauf.

12. Verfahren zur Herstellung eines Süßwarenprodukts gemäß einem der vorhergehenden Ansprüche, **dadurch gekennzeichnet, dass** es die Stufen umfasst:
- Herstellung einer Emulsion durch Mischen von Milchfermentationsprodukten, Zuckern, Stabilisatoren und/oder Verdickungsmitteln, Nahrungsmittelfetten, notwendigen Emulgatoren und Wasser;
- Entlüftungsbehandlung der auf diese Weise hergestellten Mischung;
- Zugabe von einer Geschmackstoffmischung, Ethylalkohol und einer Fruchtkomponente;
- Wärmebehandlung, bevorzugt bei einer Temperatur von nicht mehr als 105°C, für eine ausreichende Zeit, um eine sterile Mischung herzustellen;
- Homogenisierung; und
- das Abkühlen des resultierenden Produkts zum Verpacken unter sterilen Bedingungen.

## Revendications

1. Produit de confiserie de crème glacée, sous la forme d'une émulsion qui est liquide à température ambiante et peut être stockée à température ambiante dans l'état liquide lorsqu'elle est emballée dans des emballages stériles, présentant une structure microcristalline après avoir été congelé dans des conditions statiques sans incorporation de gaz, comprenant des graisses alimentaires, des dérivés du lait, des édulcorants, des additifs de stabilisation d'émulsion, des arômes, de l'eau et de quelconques émulsifiants nécessaires, **caractérisé en ce que** :
- il comprend des produits de fermentation du lait, contenant des protéines de lait, le produit de fermentation du lait étant un yaourt en quantité suffisante pour fournir une teneur en protéines de 0,1 % à 1,5 % en poids ;
- il comprend un composant fruité choisi parmi du jus, du concentré, de la purée et du fruit lyophilisé, le composant fruité étant dans une proportion dans la plage de 0,1 % à 5 % en poids exprimée en tant que poids de matières solides sèches par rapport au poids de l'émulsion ;
- il présente une teneur en graisses alimentaires dans la plage de 3 % à 6 % en poids ;
- il comprend une teneur en alcool éthylique de 0,5 % à 3 % en volume/poids ;
- il présente un pH acide dans la plage de 2,5 à 5,5 ; et
- il comprend un ou plusieurs hydrocolloïdes choisis parmi de l'amidon chimiquement modifié, de l'amidon physiquement modifié, de l'hémicellulose soluble dans l'eau, de la cellulose microcristalline, de la pectine avec un degré d'estérification dépassant 50 % en poids, de l'alginate de propylène glycol et des mélanges de ceux-ci.

2. Produit de confiserie selon la revendication 1, **caractérisé en ce qu'**il comprend des fibres solubles et/ou partiellement solubles choisies parmi des oligosaccharides de fruits et de l'inuline, de préférence dans une proportion dans la plage de 0,5 à 5 % en poids.

3. Produit de confiserie selon la revendication 1 ou 2, comprenant de l'amidon cireux (teneur en amylopectine en excédent de 85 %).

4. Produit de confiserie selon l'une quelconque des revendications 1 à 3, contenant de l'amidon physiquement ou chimiquement modifié dans une proportion de 0,1 % à 1,5 % en poids par rapport au poids total de l'émulsion.

5. Produit de confiserie selon la revendication 1 ou 2, **caractérisé en ce qu'**il comprend un hydrocolloïde choisi parmi de l'hémicellulose soluble dans l'eau, de la cellulose microcristalline, de la pectine avec un degré d'estérification dépassant 50 %, de l'alginate de propylène glycol et de mélanges de ceux-ci, dans une proportion de 0,05 % à 3 % en poids par rapport au poids de l'émulsion.

6. Produit de confiserie selon l'une quelconque des revendications précédentes, **caractérisé en ce que**, après avoir été congelé dans des conditions statiques, il présente une structure microcristalline avec des microcristaux présentant des dimensions ne dépassant pas 150 µm.

7. Produit de confiserie selon l'une quelconque des revendications précédentes, **caractérisé en ce qu'**il présente un point de congélation dans la plage de-9 °C à -14 °C.

8. Produit de confiserie selon l'une quelconque des revendications précédentes, **caractérisé en ce qu'**il présente une teneur en alcool éthylique dans la plage de 1 % à 2,5 % en volume/poids.

9. Produit de confiserie selon l'une quelconque des revendications précédentes, **caractérisé en ce que**, après avoir été congelé dans des conditions statiques, dans un récipient fermé, à une température de -25 °C ± 1 °C, jusqu'à ce que l'équilibre soit atteint, il présente un temps de formation de première goutte dans la plage de 9 à 11 minutes dans un environnement à 22 °C.

10. Produit de confiserie selon l'une quelconque des revendications précédentes, **caractérisé en ce que**, après avoir été congelé dans des conditions statiques, dans un récipient fermé, à une température de -25 °C ± 1 °C, jusqu'à ce que l'équilibre soit atteint, il présente une consistance de 1 500 à 2500 g, déterminée au moyen d'un analyseur de texture, après avoir été maintenu à une température de 22 °C pendant environ trois minutes.

11. Produit de confiserie selon l'une quelconque des revendications 1 à 10, sous forme congelée, sans débordement.

12. Procédé de préparation d'un produit de confiserie selon l'une quelconque des revendications précédentes, **caractérisé en ce qu'**il comprend les étapes de :
- préparation d'une émulsion, en mélangeant des produits de fermentation du lait, des sucres, des stabilisateurs et/ou des épaississants, des graisses alimentaires, de quelconques émulsifiants nécessaires et de l'eau ;
- traitement de désaération du mélange produit de cette manière ;
- addition d'un mélange aromatique, d'alcool éthylique et d'un composant fruité ;
- traitement thermique, de préférence à une température ne dépassant pas 105 °C, pendant une durée suffisante pour produire un mélange stérile ;
- homogénéisation ; et
- refroidissement du produit résultant pour son emballage dans des conditions stériles.
